# EUROPEAN PATENT APPLICATION

(11) **EP 1 897 702 A1**
(43) Date of publication of application: **12.03.2008**
(21) Application number: 07115820.8
(22) Date of filing: 06.09.2007
(51) Int. Cl.: B60C 1/00, C08K 7/16, C08K 9/00, C08K 13/04, C08L 9/00, C08L 21/00

(54) **Tire with tread having an outer cap layer and underlying transition layer containing corncob granules**

(30) Priority: 08.09.2006 US 518075
(71) Applicant: THE GOODYEAR TIRE & RUBBER COMPANY, Akron, OH 44316-0001 (US)
(72) Inventor: Sandstrom, Paul Harry, Cuyahoga Falls, OH 44223 (US); Zhang, Ping, Hudson, OH 44236 (US); Hubbell, Joseph Kevin, Akron, OH 44313 (US)
(74) Representative: Kutsch, Bernd

(57) **Abstract**

The invention relates to a tire having a lug and groove configured tread (1) having an outer cap layer with a running surface and an underlying specialized transition layer (6). The transition layer rubber is specialized in a sense of containing corncob granules.

## Description

### Field of the Invention

The invention relates to a tire having a lug and groove configured rubber tread having an outer rubber cap layer with a running surface and an underlying specialized transition layer. The transition layer rubber is specialized in a sense of containing corncob granules. The corncob granules may be colored with a suitable colorant of non-black color so that the transition rubber layer might be used as a treadwear indicator (or tread depth indicator), depending somewhat upon the thickness of the transition rubber layer.

### Background and Practice of the Invention

Pneumatic tires have treads which may be of a lug and groove configuration. Such tires are often of a cap/base construction composed of a lugged outer tread cap rubber layer with its lugs presenting a tread running surface intended to be ground-contacting with good physical properties to promote resistance to treadwear and reduced rolling resistance for the tire itself in combination with an underlying base rubber layer to provide a cushion for the outer tread cap rubber layer.

The tread cap rubber layer is typically prepared with a relatively expensive combination of elastomers and compounding ingredients intended to promote a tire running surface with suitable resistance to tread wear and reduced rolling resistance.

During service, the lugs of the tread cap rubber layer gradually wear away until the tread cap layer of the worn tire becomes sufficiently thin that the tire should be taken out of service. At such time, a considerable amount of the relatively expensive rubber tread cap layer normally remains which is either discarded with the tire or ground away to prepare the tire for retreading.

Accordingly, motivation is present for preparing a novel cost-savings tire tread which is a departure from past practice.

For this invention, it is proposed to provide a less expensive transition layer rubber in a sense of containing an inclusion of corncob granule dispersion which underlies said tread cap layer and is therefore exclusive of said outer tread cap rubber layer and exclusive of said base rubber layer, if used.

In practice, the outer tread rubber cap layer is typically of a rubber composition containing reinforcing filler comprising rubber reinforcing carbon black, precipitated silica or a combination of rubber reinforcing carbon black and precipitated silica. A major function of the tread cap layer is typically to promote a reduction in rolling resistance, promote traction for the tire tread as well as to promote resistance to tread wear.

The optional tread base rubber layer, if used, is typically composed of a softer and cooler running rubber composition, as compared to the rubber composition of the outer tread cap layer to, in one sense, provide a cushion for the outer tread cap layer.

For this invention, the specialized rubber layer is presented as a significant departure from said outer tread cap rubber layer, and said optional tread base rubber layer, if used, in a sense that it contains a dispersion of corncob granules and, optionally, at least one of scrap rubber and coal dust. In another embodiment, said tread cap layer rubber and/or optional base layer rubber may contain said corncob granules, as well as optionally said scrap rubber and/or coal dust in a limited amount.

In this manner, then, the specialized transition tread rubber layer is considered herein to be neither of such tread cap rubber layer nor such optional tread base rubber layer because, in part, it is composed of a different and less expensive rubber composition, in a sense of containing the corncob granules, than the rubber compositions of said tread cap rubber layer and said tread base rubber layer.

In practice, as the tread cap rubber layer, and its associated tread lugs with their running surfaces, wears away during the running of the tire over time during the service of the tire, the underlying specialized transition rubber layer, which extends radially outwardly into a portion of the lugs, and optionally into the grooves, of the outer tread cap layer, becomes exposed and thereby becomes a new portion of the running surface of the tread prior to the tread being sufficiently worn to warrant removing the tire from service. In this manner, then, the corncob granule-containing, and optional scrap rubber and/or coal dust-containing, underlying specialized transition rubber layer may present a new running surface for the tread after a sufficient amount of the outer tread cap rubber layer wears away. The lug and groove configuration of the worn tread is therefore maintained, since the underlying specialized transition layer extends radially outward to include a portion of the tread lugs, and optionally the tread grooves of the tread cap layer, and rubber composition of the transition rubber layer presents a new running surface for the tread lugs.

In one embodiment then, such tire is provided wherein at a least a portion of said transition rubber layer is positioned within at least one of said tread lugs of said outer tread cap rubber layer in a manner to become a running surface of the tire upon at least a portion of said lug of said outer tread cap layer wearing away (e.g. as the tire is run in service) to expose said transition rubber layer.

Heretofore, various dual layered tire treads have been proposed which are composed of a cap/base construction in which the outer tread cap rubber layer contains a running surface for the tire and the underlying tread base rubber layer provides, in a sense, a cushion for the tread cap layer, such as for example US-B- 6,959,743 or of a dual tread base layer configuration, such as for example US-B- 6,095,217 as well as a cap/base construction in which the base layer extends into lugs of the tread and into its tread cap layer such as for example US-B- 6,336,486.

Corncob granule-containing tire components such as, for example a tire tread, have been proposed as mentioned in US-A- 2006/0021688 and US-A-2006/0000532.

The tire tread of this invention is considered herein to differ significantly therefrom in a sense that it is directed to a tire tread transition rubber layer which is intended to be exclusive of the tread cap rubber layer and the optional tread base rubber layer, if used, in a sense, for example, that it contains the dispersion of corncob granules, and optionally, at least one of partially depolymerized cured rubber, particulate pre-cured rubber and coal dust.

The term "corncob granules" is used herein to refer to corncob granules which are obtained from the woody ring surrounding the central core, or pith, of the corncob, rather than the corn kernels themselves. The corncob granules are manufactured by drying the woody ring portion, or fraction, of the corncob followed by grinding to produce the granules which are air cleaned and separated into various sizes by mesh screening. Representative of such corncob granules are manufactured by The Andersons, Inc. and sold as Grit-O' cobs^{®} corncob granules, for example as 60 Grit-O' cobs^{®}. For further corncob granule discussion, see "Use of Fine-R-Cobs as a Filler For Plastics", by D. B. Vanderhooven and J. G. Moore, reprinted from the Internal Wire and Cable Symposium 1982.

In practice, scrap rubber in a form of partially depolymerized cured rubber (sometimes referred to as being recycle rubber) and in a form of particulate pre-cured rubber are well known to those having skill in such art.

Such recycle rubber is a vulcanized (cured) rubber which has been broken down by various processes, or combination of processes, which may include chemical breakdown, to form a partially depolymerized, and possibly partially devulcanized, rubber. Representative of such recycle rubber is, for example, partially depolymerized rubber as RNR 50B11C from Rubber Resources.

Such particulate pre-cured rubber (sometimes referred to as ground cured rubber) may be obtained, for example, by physically grinding vulcanized rubber, which may include cryogenic grinding, to form small particles of cured rubber. Representative of such ground pre-cured rubber is, for example, TR-30c from Edge Rubber.

It is important to appreciate that both the recycle rubber and the ground rubber relate to rubber which has been first vulcanized.

The resultant recycle rubber and ground rubber may have somewhat an appearance of unvulcanized rubber but have important differences and properties therefrom. They, particularly the recycle rubber, are composed of a mixture of polymer units of various and numerous constructions different from either unvulcanized or vulcanized rubber. Thus they are typically a complex mixture of largely unknown polymer(s), compounding ingredients, which may possibly contain small amounts of bits of textile fiber and the like.

In practice, it has been observed that, after adding sulfur and vulcanization accelerator curatives to recycle rubber and to ground cured rubber, followed by sulfur re-vulcanization thereof, the resulting physical properties, such as for example tensile, elongation and dynamic modulus, are usually significantly lower than the corresponding properties of the original vulcanized rubber composition prior to its being partially depolymerized or ground.

Coal dust is a carbonaceous dust from naturally occurring coal which significantly differs from synthetically produced rubber reinforcing carbon black composed of aggregates of primary carbon particles as would be well known to those having skill in such art. Coal dust might sometimes be referred to as coal fines. Coal dust is conventionally of significantly greater size (greater average diameter) than rubber reinforcing carbon black aggregates, is not rubber reinforcing in the sense of rubber reinforcing carbon black, represents a significantly lower cost filler than rubber reinforcing carbon black and, significantly, can be usually be used in greater quantities (concentration) in the rubber composition without significantly adversely affecting the processing of the rubber composition. Representative of such coal dust is, for example, Austin Black 325c from Coal Fillers.

In the description of this invention, the terms "rubber" and "elastomer" where used herein, are used interchangeably, unless otherwise prescribed. The terms "rubber composition", "compounded rubber" and "rubber compound", where used herein, are used interchangeably to refer to "rubber which has been blended or mixed with various ingredients" and the term "compound" relates to a "rubber composition" unless otherwise indicated.

In the description of this invention, the term "phr" refers to parts of a respective material per 100 parts by weight of rubber, or elastomer to include said partially depolymerized pre-cured rubber and said particulate pre-cured rubber ingredients. The terms "cure" and "vulcanize" are used interchangeably unless otherwise indicated. The term "Tg", if used, means the middle point glass transition temperature of an elastomer determined by DSC (differential scanning calorimeter) at a heating rate of 10°C per minute.

### Summary of the Invention

In accordance with this invention, a tire according to claim 1 is provided.

Dependent claims refer to preferred embodiments of the invention.

In one embodiment, said tread transition layer rubber is substantially exclusive of
(A) partially depolymerized pre-cured rubber,
(B) particulate pre-cured rubber, and
(C) coal dust.

In another embodiment, said tread transition layer rubber further contains from 2 to 10 phr of at least one ingredient comprising at least one of:
(A) partially depolymerized pre-cured rubber,
(B) particulate pre-cured rubber, and
(C) coal dust.

In another embodiment, said specialized transition layer rubber contains 40 to 120 phr of filler reinforcement selected from at least one of carbon black and precipitated silica comprising:
(A) rubber reinforcing carbon black;
(B) precipitated silica, e.g. amorphous, synthetic silica; or
(C) a combination of rubber reinforcing carbon black and precipitated silica, e.g. 5 to 80 phr of rubber reinforcing carbon black and from 5 to 80 phr of precipitated silica.

In one embodiment, said tread outer cap layer rubber comprises at least one conjugated diene-based elastomer substantially exclusive of said corncob granules and also substantially exclusive of said partially depolymerized cured rubber, particulate pre-cured rubber and coal dust, and

In another embodiment, said tread outer cap layer rubber contains less than 2 phr of said corncob granules.

In another embodiment, said optional tread base layer rubber contains at least one conjugated diene-based elastomer substantially exclusive of said corncob granules and also substantially exclusive of said partially depolymerized cured rubber, particulate pre-cured rubber and coal dust.

In another embodiment, said optional tread base layer rubber, if used, contains less than about 2 phr of said corncob granules.

In one embodiment, at least one of said tread cap layer rubber and said optional tread base layer rubber, if used, contains up to 10 phr of corncob granules so long as said tread cap layer rubber and said tread base rubber individually contain up to 3 phr of, or up to 10 phr less than, which ever is the greatest amount, of corncob granules contained in said transition layer rubber.

In one embodiment, said optional tread base layer rubber, if used, comprises at least one conjugated diene-based elastomer substantially exclusive of said corncob granules.

In one embodiment, said optional tread base layer rubber contains less than 2 phr of said corncob granules and of said partially depolymerized cured rubber, particulate pre-cured rubber and coal dust.

In one embodiment, said tread outer cap layer rubber may contain from 40 to 120 phr of filler reinforcement selected from at least one of carbon black and precipitated silica comprising:
(A) rubber reinforcing carbon black;
(B) precipitated silica, e.g. amorphous, synthetic silica; or
(C) a combination of rubber reinforcing carbon black and precipitated silica, e.g. 5 to 80 phr of rubber reinforcing carbon black and from 5 to 80 phr of precipitated silica.

In one embodiment, said specialized transition tread rubber layer extends radially outward into and within at least one of said tread lugs to include from 5 to 50 percent, alternately from 10 to 30 percent, of the height of tread grooves extending from the bottom of the tread grooves (within the tread transition layer) extending in a direction of the outer running surface of the tread grooves of the outer tread rubber cap layer.

A significant aspect of this invention is providing the inclusion of the transition tread rubber layer in the tire tread configuration which contains said corncob granule dispersion in a sense of:
(A) promoting a reduced cost of the overall tread;
(B) requiring a portion of the specialized transition layer to extend radially outward into the lugs of the outer tread cap rubber layer in a manner for the transition rubber layer (containing the corncob granule dispersion) to provide a running surface of the tread upon the wearing away of the outer tread cap rubber layer during the service running of the tire.

Indeed, the aspect of providing a tread cap lug which abridges two associated tread cap grooves of which the transition layer extends radially outward into and within said tread cap lug is considered herein to be significant because it provides an underlying transition rubber layer which maximizes the use of the corncob granule-containing rubber to promote a reduction in cost of the overall tread without significantly affecting various aforesaid physical properties of the running surface the tire during most of the service life of the tire tread.

In one embodiment, the invention is to be considered in a synergistic combination rather than treated as individual aspects and components of the invention. In such embodiment, the tire tread particularly should not be considered as a simple tread composite of a relatively thick base and thin cap but of a combination of a tread cap rubber layer and underlying transition rubber layer with its inclusion of said corncob granule dispersion, and optionally said scrap rubber and/or coal dust, together with a tread configuration with grooves which extend through the outer tread cap rubber layer radially inward into portion of the transition rubber layer.

Such combination of the grooved tread cap rubber layer and associated underlying transition rubber layer is considered herein to be synergistic in a sense that, as the outer tread cap layer wears away during the service of the tire, the underlying transition rubber layer presents a lug and groove configuration for which the then exposed lugs of the transition rubber layer (which contains the aforesaid inclusion of said corncob dispersion, and optionally said scrap rubber and/or coal dust) presents a portion of the running surface of the tire for which its rubber can present physical properties many of which are similar to the rubber of aforesaid outer tread rubber cap layer.

In a further embodiment, the corncob granules may be colored with a suitable colorant of non-black color such as, for example, a dye, so that the specialized transition rubber layer can be a tread depth indicator. Accordingly, said tire has a tread which contains a tread depth indicator (e.g. speckled indicator and not a solid color indicator) in a form of said specialized tread transition rubber layer which contains said dispersion of non-black colored corncob granules. Such corncob granules may be of various colors, for example, yellow, white and/or blue, which contrasts with black. In one embodiment, corncob granules may comprise at least two different colored (non-black colored) corncob granules so that an exposed (visible) transition tread rubber layer may present a multi-colored speckled appearance.

The precipitated silica, if used in one or more of the tread rubber compositions, is normally used in combination with a coupling agent having a moiety reactive with hydroxyl groups contained on the surface of the silica (e.g. silanol groups) and another moiety interactive with said diene-based elastomers. For example, such coupling agent may be a bis(3-trialkoxysilylalkyl) polysulfide which contains an average of from 2 to 4, alternately an average of from 2 to 2.6 or an average of from 3.4 to 3.8, connecting sulfur atoms in its polysulfidic bridge. Representative of such coupling agent is for example, bis(3-triethoxysilylpropyl) polysulfide.

Alternately, such coupling agent may be an organomercaptosilane (e.g. an alkoxyorganomercaptosilane), and particularly an alkoxyorganomercaptosilane having its mercapto function capped.

Such coupling agent may, for example, be added directly to the elastomer mixture or may be added as a composite of precipitated silica and such coupling agent formed by treating a precipitated silica therewith.

In practice, the synthetic amorphous silica may be selected from aggregates of precipitated silica, which is intended to include precipitated aluminosilicates as a co-precipitated silica and aluminum.

The precipitated silica aggregates may be prepared, for example, by an acidification of a soluble silicate, e.g., sodium silicate, in the presence of a suitable electrolyte and may include co-precipitated silica and a minor amount of aluminum.

Such silicas might have a BET surface area, as measured using nitrogen gas, such as, for example, in a range of 40 to 600 m²/g. The BET method of measuring surface area is described in the Journal of the American Chemical Society, Volume 60 (1938).

The silica might also have a dibutylphthalate (DBP) absorption value in a range of, for example, 50 to 400 cm³/100g.

Various commercially available precipitated silicas may be considered for use in this invention such as, only for example herein, and without limitation, silicas from PPG Industries under the Hi-Sil trademark with designations Hi-Sil 210, Hi-Sil 243, etc; silicas from Rhodia as, for example, Zeosil 1165MP and Zeosil 165GR, silicas from J. M. Huber Corporation as, for example, Zeopol 8745 and Zeopol 8715, silicas from Degussa AG with, for example, designations VN2, VN3 and Ultrasil 7005 as well as other grades of precipitated silica.

Various rubber reinforcing carbon blacks might be used for the tread rubber compositions. Representative of various rubber reinforcing blacks may be referred to by their ASTM designations such as for example, although not intended to be limiting, N110, N121 and N234. Other rubber reinforcing carbon blacks may found, for example, in The Vanderbilt Rubber Handbook (1978), Page 417.

Representative of various diene-based elastomers for said tread cap rubber, said tread transition rubber layer and said and base layer may include, for example, styrene-butadiene copolymers (prepared, for example, by organic solvent solution polymerization or by aqueous emulsion polymerization), isoprene/butadiene copolymers, styrene/isoprene/butadiene terpolymers and tin coupled organic solution polymerization prepared styrene/butadiene copolymers, cis 1,4-polyisoprene and cis 1,4-polybutadiene as well as trans 1,4-polybutadiene 3,4-polyisoprene and high vinyl polybutadiene rubber.

### Drawings

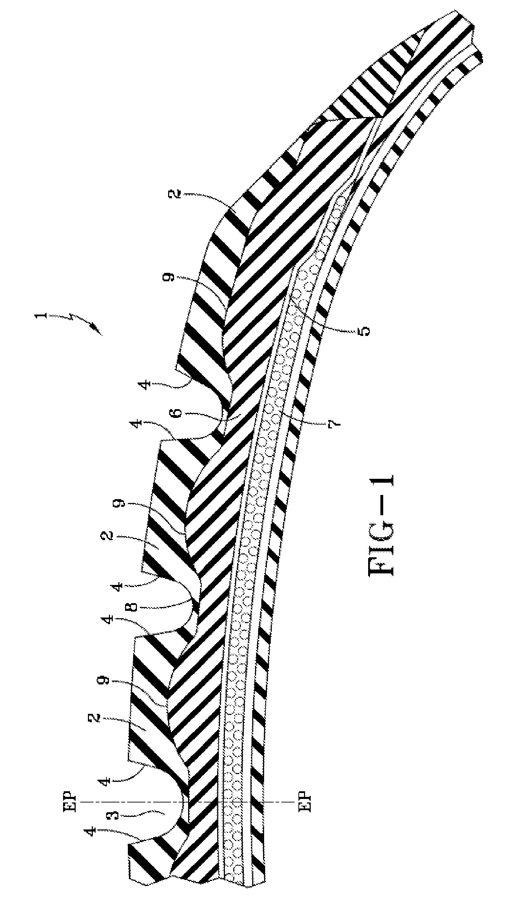

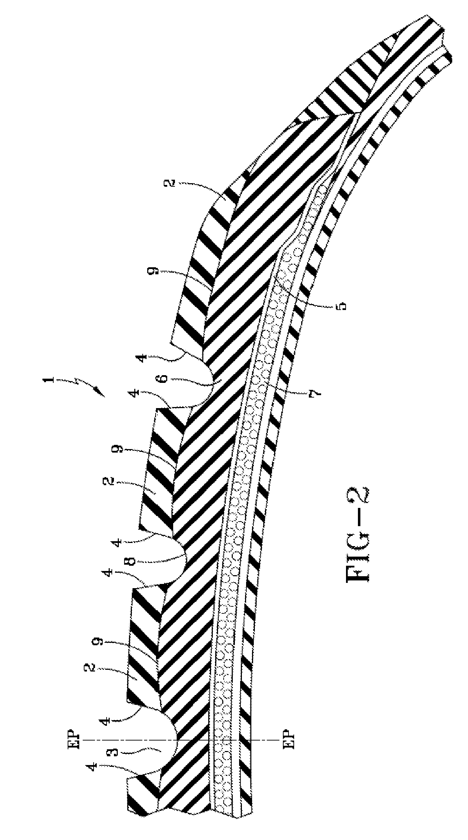

For a further understanding of this invention, FIGURE 1 and FIGURE 2 are provided as partial cross-sectional views of a tire tread.

### Detailed description

FIG 1 depicts a tread construction of a tread 1 a lug 2 and groove 3 construction which comprises a tread outer cap rubber layer 4 containing said grooves 3 and lugs 2 intended to be ground-contacting, an optional tread base rubber layer 5, if used, and a specialized transition tread rubber layer 6 underlying said tread outer cap layer 4, as well as circumferential belt plies 7, wherein said transition layer 6 is referred to herein as being specialized in a sense of containing a significant amount of a dispersion of corncob granules. It is considered herein that said corncob granule-containing specialized transition tread layer 6 constitutes a relatively lower cost rubber composition than the rubber composition of said tread cap rubber layer 4 and said optional tread base rubber layer 5.

From FIG 1 it can be seen that a bottom portion 8 of the grooves 3 extends radially inward within said tread cap layer 4. It can further be seen that the underlying tread specialized transition layer 6 extends radially outward into the tread lugs 2 to an position 9, or extent, of 50 percent of the height of the tread lugs 2 from the bottom of the associated tread grooves 8 on at least one side of the tread lugs 2.

In this manner it is seen that the tread specialized transition rubber layer 6 extends into the lug 2 to a position 9, or extent, in a manner to provide significant physical support to the associated tread lug 2 into which it radially extends.

As the tread cap layer 4 wears away during service running of the tire, a portion of the underlying transition rubber layer 6 becomes exposed and thereby becomes a running surface of the tire. Where the corncob granules are colored a non-black color in contrast to the color of the outer tread cap layer 4, with a colorant of a color other than black, the colored corncob granules contained in the transition rubber layer 6 become visible as a treadwear indicator.

From FIG 2 it can be seen that the bottom portion 8 of the grooves 3 extends radially inward into the tread transition rubber layer 6 or, in other words, a portion of said transition layer 6 encompasses the bottom portion 8 of said grooves 3 of said tread cap layer 4 which extend completely through said tread cap layer 4 and into the tread transition rubber layer 6.

In particular, it is seen that the tread transition rubber layer 6 extends into the tread lug 2 to a position 9, or extent, in a manner to provide significant physical support to the associated lug 2 into which it radially extends.

In FIG 2, the radial extension of the tread transition rubber layer 6 outward into the groove 3 is more inclusive of the portion of the wall 4 of the associated grooves 3.

In practice, the rubber compositions may be prepared in at least one preparatory (non-productive) mixing step in an internal rubber mixer, often a sequential series of at least two separate and individual preparatory internal rubber mixing steps, or stages, in which the diene-based elastomer is first mixed with the prescribed silica and/or carbon black as the case may be followed by a final mixing step (productive mixing step) in an internal rubber mixer where curatives (sulfur and sulfur vulcanization accelerators) are blended at a lower temperature and for a substantially shorter period of time.

It is conventionally required after each internal rubber mixing step that the rubber mixture is actually removed from the rubber mixer and cooled to a temperature below 40°C, and then added back to an internal rubber mixer for the next sequential mixing step, or stage.

The forming of a tire component is contemplated to be by conventional means such as, for example, by extrusion of rubber composition to provide a shaped, unvulcanized rubber component such as, for example, a tire tread.

It is understood that the tire, as a manufactured article, is prepared by shaping and sulfur curing the assembly of its components at an elevated temperature (e.g. 140CC to 170CC) and elevated pressure in a suitable mold.

It is readily understood by those having skill in the pertinent art that the rubber composition would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Representative of phenylenediamine antidegradants, if used, are, for example, antioxidants such as mixed diaryl p-phenylenediamine Polystay^{®} 100 available from The Goodyear Tire & Rubber Company, (N-1,3 dimethyl butyl) N-phenyl-phenylenediamine from Flexsys Co. and others disclosed in The Vanderbilt Rubber Handbook (1990), Pages 343 and 344.

Representative non-aromatic rubber processing oils, if used, are normally intended to be such oils which contain less than 15 weight percent aromatic compounds, if at all, are, and for example, contain 46 percent to 51 percent paraffinic content and 36 percent to 42 percent naphthenic content.

Typical amounts of fatty acids, if used, which can include stearic acid, comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Preferably, the primary accelerator(s) is used in total amounts ranging from 0.5 to 4. Preferably, the primary accelerator is a sulfenamide. If a second accelerator is used, the secondary accelerator is preferably a guanidine, dithiocarbamate or thiuram compound.

The mixing of the rubber composition can preferably be accomplished by the aforesaid sequential mixing process. For example, the ingredients may be mixed in at least two stages, namely, at least one non-productive (preparatory) stage followed by a productive (final) mix stage. The curatives are typically mixed in the final stage which is conventionally called the "productive" or "final" mix stage in which the mixing typically occurs at a temperature, or ultimate temperature, lower than the mix temperature(s) of the preceding non-productive mix stage(s).

### Example I

Rubber compositions were prepared for evaluating an effect of an inclusion of a rubber composition which contains a dispersion of corncob granules for a specialized transition layer for a tire tread.

Sample A is a control sample. Experimental rubber Samples B through G contained various amounts of a corncob granule dispersion.

The rubber compositions were prepared by mixing the ingredients in sequential non-productive (NP) and productive (PR) mixing steps in one or more internal rubber mixers.

The basic recipe for the Samples is presented in the following Table 1 and recited in parts by weight unless otherwise indicated.

**Table 1**

| **Non-Productive Mixing Step (NP), (mixed to 160°C)** | **Parts** |
|---|---|
| Styrene/Butadiene oil extended rubber¹ | 70 (plus 26.25 parts oil) |
| Polybutadiene rubber² | 30 |
| Carbon black (N299)³ | Variable from 50 to 70 |
| Processing oil and wax⁴ | 21.8 |
| Zinc oxide | 2 |
| Stearic acid⁵ | 2 |
| Antidegradant⁶ | 1.5 |
| Corncob granules⁷ | Variable from 0 to 25 |

| **Productive Mixing Step (PR), (mixed to 110°C)** | |
|---|---|
| Sulfur | 1.45 |
| Sulfenamide and thiuram disulfide types | 1.25 |

| | |
|---|---|
| ¹Emulsion polymerization prepared styrene/butadiene rubber as PLF1712C from The Goodyear Tire & Rubber Company having a bound styrene content of about 23.5 percent ²Cis 1,4-polybutadiene rubber (prepared by organic solvent solution polymerization) as Budene 1207^{™} from The Goodyear Tire & Rubber Company having a cis 1,4-microstructure of at least about 97 percent ³Rubber reinforcing carbon black as N299, an ASTM designation ⁴Rubber processing oil and microcrystalline wax ⁵Fatty acid comprised (composed) of at least 90 weight percent stearic acid and a minor amount of other fatty acid comprised (composed of) primarily of palmitic and oleic acids. ⁶Antidegradant of the phenylenediamine type ⁷Corncob granules as 60 Grit-O' cobs^{®} from The Andersons, Inc. | |

The following Table 2 illustrates cure behavior and various physical properties of rubber compositions based upon the basic recipe of Table 1.

**Table 2**

| | **Samples** | | | | | | |
|---|---|---|---|---|---|---|---|
| | Control A | B | C | D | E | F | G |
| Corncob granules (phr) | 0 | 5 | 15 | 25 | 5 | 15 | 25 |
| Rubber reinforcing carbon black (phr) | 70 | 70 | 70 | 70 | 50 | 50 | 50 |
| Mooney viscosity, ML (1 +4) at 100°C (uncured rubber composition) | 67 | 72 | 75 | 78 | 52 | 55 | 57 |
| **Rheometer, MDR¹, 160°C, 30 min** | | | | | | | |
| Maximum torque (dNm) | 12.7 | 13.0 | 13.3 | 13.5 | 9.4 | 9.8 | 10.2 |
| Minimum torque (dNm) | 2.7 | 2.7 | 2.7 | 2.7 | 2.0 | 2.1 | 2.1 |
| Delta torque (dNm) | 10 | 10.3 | 10.6 | 10.8 | 7.4 | 77 | 8.1 |
| T90 (minutes) | 7.3 | 7.2 | 7.1 | 7.1 | 7.8 | 7.8 | 7.8 |
| **Stress-strain, ATS, ring tensile, 14 min, 160°C²** | | | | | | | |
| Tensile strength (MPa) | 16 | 13.8 | 10.9 | 10.3 | 11.5 | 10 | 8.9 |
| Elongation at break (%) | 739 | 685 | 615 | 632 | 776 | 763 | 752 |
| 100% modulus (MPa) | 1.08 | 1.19 | 1.29 | 1.42 | 0.87 | 0.99 | 1.07 |
| 300% modulus (MPa) | 4.3 | 4.5 | 4.2 | 4.1 | 2.9 | 2.8 | 2.7 |
| **Rebound** | | | | | | | |
| 23°C300 % modulus (MPa) | 31 | 31 | 31 | 30 | 41 | 41 | 40 |
| 100°C | 47 | 47 | 44 | 44 | 54 | 53 | 51 |
| **Shore A Hardness** | | | | | | | |
| 23°C | 63 | 64 | 66 | 68 | 53 | 57 | 59 |
| 100°C | 50 | 50 | 52 | 54 | 43 | 44 | 45 |
| **RDS Strain sweep, 10 Hz, 30°C³** | | | | | | | |
| Modulus G', at 0.2% strain (MPa) | 8.4 | 10.4 | 12.1 | 13.7 | 3.4 | 4.2 | 4.2 |
| Modulus G', at 50% strain (MPa) | 1 | 1.1 | 1.2 | 1.3 | 0.9 | 1 | 1 |
| Tan delta at 5% strain | 0.35 | 0.35 | 0.35 | 0.35 | 0.25 | 0.23 | 0.24 |
| **RPA 521, 11 Hz, 100°C⁴** | | | | | | | |
| Modulus G', at 1 % strain (MPa) | 2.3 | 2.4 | 2.5 | 2.6 | 1.2 | 1.2 | 1.3 |
| Modulus G', at 14% strain (MPa) | 1.0 | 1.0 | 1.0 | 1.1 | 0.7 | 0.7 | 0.8 |
| Tan delta at 5% strain | 0.25 | 0.25 | 0.25 | 0.26 | 0.18 | 0.18 | 0.19 |
| **Tear Strenght 95ºC, (Newtons)⁵** | 209 | 170 | 126 | 85 | 90 | 65 | 59 |

| | | | | | | | |
|---|---|---|---|---|---|---|---|
| ¹Data according to Moving Die Rheometer instrument, model MDR-2000 by Alpha Technologies, used for determining cure characteristics of elastomeric materials, such as for example Torque, T25, etc. ²Data according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. ³Data according to Rheometric Dynamic Spectrometer analytical instrument. ⁴Data according to Rubber Process Analyzer as RPA 2000c instrument by Alpha Technologies, formerly the Flexsys Company and formerly the Monsanto Company. References to an RPA-2000 instrument may be found in the following publications: H.A. Palowski, et al, Rubber World, June 1992 and January 1997, as well as Rubber & Plastics News, April 26 and May 10, 1993. ⁵Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. | | | | | | | |

It can be seen from Table 2 that the compound (rubber composition) stiffness (100% modulus, dynamic moduli G' and Shore A hardness) is increased with the introduction of corncob granules into the compound when the carbon black loading (50 and 70 phr) is maintained.

This is considered herein to be significant in a sense that the presence of the corncob granule dispersion is seen to provide some reinforcement to the rubber compound.

It can also be seen from Table 2 that the hysteretic properties (tan delta at 30°C and 100°C) of the compound are not significantly affected with the introduction of the corncob granular dispersion into the compound when the carbon black loading (50 and 70 phr) is maintained.

This is considered herein to be significant in a sense that the heat build up characteristics (the aforesaid hysteretic property) of the compound is substantially maintained with the introduction of the corncob granule dispersion into the rubber compound.

### Example II

Rubber compositions were prepared for evaluating an effect of an inclusion of corncob granules where the compound Shore A hardness was kept similar for a specialized transition layer for a tire tread.

Sample H is a Control rubber sample. Experimental rubber Samples I through K contained various amounts of a corncob granule dispersion.

The rubber compositions were prepared by mixing the ingredients in sequential non-productive (NP) and productive (PR) mixing steps in one or more internal rubber mixers.

The basic recipe for the rubber Samples is presented in Table 1 of the previous Example I. For this Example II, the corn cob granule content of the rubber compositions was from zero for the Control Sample H and a range of from 7.5 to 25 phr for the experimental Samples J through K.

The following Table 3 illustrates cure behavior and various physical properties of rubber Samples H through K.

It can be seen from Table 3 that the hysteretic properties (tan delta at 30°C and 100°C) of the compound are improved (reduced) and rebound value is increased (improved) with the introduction of the corncob granular dispersion into the rubber composition with the Shore A hardness property remaining similar. The Shore A hardness (100°C) for the experimental Samples I, J and K remained the same as the corn cob granule concentration increased from 7.5 phr to 25 phr and was similar or the same as the Shore A hardness (100°C) as the Control H Sample which did not contain the corn cob dispersion.

This is considered herein to be significant in a sense that the heat build up characteristics (the aforesaid hysteretic property) of the compound is improved (reduced) by the introduction of the corncob granule dispersion into the rubber composition while its stiffness (Shore A hardness) is maintained.

**Table 3**

| | Control H | I | J | K |
|---|---|---|---|---|
| Corncob granules (phr) | 0 | 7.5 | 15 | 25 |
| Rubber reinforcing carbon black (phr) | 70 | 65 | 60 | 55 |
| Mooney viscosity, ML (1 +4) at 100°C (uncured rubber composition) | 67 | 66 | 60 | 60 |

| **Rheometer, MDR¹, 160ºC, 30 min** | | | | |
|---|---|---|---|---|
| Maximum torque (dNm) | 12.4 | 12.1 | 11.5 | 10.9 |
| Minimum torque (dNm) | 2.7 | 2.7 | 2.4 | 2.3 |
| Delta torque (dNm) | 9.7 | 9.4 | 9.1 | 8.6 |
| T90 (minutes) | 8.1 | 8.1 | 8.1 | 8.2 |

| **Stress-strain, ATS, ring tensile, 14 min, 160ºC** | | | | |
|---|---|---|---|---|
| Tensile strength (MPa) | 16.8 | 13.4 | 12.2 | 10.1 |
| Elongation at break (%) | 770 | 736 | 747 | 757 |
| 100% modulus (MPa) | 1.08 | 1.11 | 1.12 | 1.13 |
| 300% modulus (MPa) | 4 | 3.4 | 3.1 | 2.5 |

| **Rebound** | | | | |
|---|---|---|---|---|
| 23°C300 % modulus (MPa) | 31 | 34 | 35 | 37 |
| 100°C | 47 | 48 | 50 | 50 |

| **Shore A Hardness** | | | | |
|---|---|---|---|---|
| 23°C | 63 | 62 | 60 | 61 |
| 100°C | 49 | 49 | 49 | 49 |

| **RDS Strain sweep, 10 Hz, 30ºC³** | | | | |
|---|---|---|---|---|
| Modulus G', at 0.2% strain (MPa) | 7.9 | 6.4 | 6 | 4.5 |
| Modulus G', at 50% strain (MPa) | 1.1 | 1 | 1 | 1 |
| Tan delta at 5% strain | 0.38 | 0.34 | 0.32 | 0.30 |

| **RPA521, 11 Hz, 100°C⁴** | | | | |
|---|---|---|---|---|
| Modulus G', at 1 % strain (MPa) | 2.1 | 1.8 | 1.6 | 1.4 |
| Modulus G', at 14% strain (MPa) | 0.9 | 0.9 | 0.9 | 0.8 |
| Tan delta at 5% strain | 0.23 | 0.22 | 0.21 | 0.2 |
| **Tear Strenght 95ºC, (Newtons)⁵** | 195 | 146 | 114 | 69 |

## Claims

1. A tire having a tread comprising an outer tread cap layer (4) and an underlying specialized transition tread layer (6) and, optionally, a tread base layer (5) underlying said specialized transition rubber layer (6);
wherein said outer tread cap rubber layer (4) comprises a lug and groove configuration with raised lugs (2) having tread running surfaces and grooves (3) positioned between said lugs (2); and
wherein said transition layer (6) contains a dispersion of corncob granules.

2. The tire of claim 1 having a tread comprising said outer tread cap layer (4), said underlying specialized transition tread layer (6), and said tread base layer (5).

3. The tire of claim 1 or 2 wherein said tread transition layer (6) comprises, based upon parts by weight per 100 parts by weight rubber (phr):
(A) 100 phr of at least one diene-based elastomer;
(B) from 5 to 50 phr of corncob granules.

4. The tire of at least one of the previous claims wherein said tread transition layer (6) further contains from 2 to 10 phr of least one ingredient comprising at least one of:
(A) partially depolymerized pre-cured rubber,
(B) particulate pre-cured rubber, and
(C) coal dust.

5. The tire of at least one of the previous claims wherein said specialized transition layer (6) further contains from 40 to 120 phr of filler reinforcement selected from at least one of:
(A) rubber reinforcing carbon black;
(B) precipitated silica, e.g. amorphous, synthetic silica; or
(C) combination of rubber reinforcing carbon black and precipitated silica.

6. The tire of at least one of the previous claims wherein said transition tread layer (6) extends radially outward into and within at least one of said tread lugs (2) to include 5 to 50 percent of the height of said tread lug (2) extending from the bottom of at least one tread groove (3) adjacent to at least one side of said tread lug (2), and, optionally, wherein at least one of said tread grooves (3) extends radially inwardly through said outer tread cap layer (4) into a portion of said transition tread layer (6) and is thereby a part of said transition tread layer (6).

7. The tire of at least one of the previous claims wherein at a least a portion of said transition tread layer (6) is positioned within at least one of said tread lugs (2) of said outer tread cap layer (4) in a manner to become a running surface of the tire upon at least a portion of said lug (2) of said outer tread cap layer (4) wearing away to expose said transition tread layer (6).

8. The tire of at least one of the preceding claims wherein said corncob granules are non-black colored with a non-black colored colorant.

9. The tire of at least one of the preceding claims 1 through 8 wherein said tread (1) contains a speckled tread depth indicator in a form of said specialized transition layer (6) containing a dispersion of non-black color corncob granules.

10. The tire of at least one of the preceding claims 1 through 9 wherein the corncob granules comprise corncob granules of at least two non-black colors to present a multi-colored speckled appearance for said specialized transition tread layer (6).
